# EUROPÄISCHE PATENTSCHRIFT

(11) **EP 2 106 496 B1**
(45) Veröffentlichungstag und Bekanntmachung des Hinweises auf die Patenterteilung: **15.09.2010**
(21) Anmeldenummer: 07822657.8
(22) Anmeldetag: 16.11.2007
(51) Int. Cl.: F01N 3/025, F01N 3/20, F02M 63/02

(54) **VORRICHTUNG ZUR DOSIERUNG VON KRAFTSTOFF ZUM ABGASSYSTEM EINES VERBRENNUNGSMOTORS**
DEVICE FOR DOSING FUEL INTO THE EXHAUST SYSTEM OF AN INTERNAL COMBUSTION ENGINE
DISPOSITIF DE DOSAGE DE CARBURANT DANS LE SYSTÈME DE GAZ D'ÉCHAPPEMENT D'UN MOTEUR À COMBUSTION INTERNE

(30) Priorität: 28.12.2006 DE 102006062491
(43) Veröffentlichungstag der Anmeldung: 07.10.2009
(73) Patentinhaber: Robert Bosch GmbH, 70442 Stuttgart (DE)
(72) Erfinder: REUSING, Volker, 70197 Stuttgart (DE); STEIN, Stefan, 70195 Stuttgart (DE)
(86) Internationale Anmeldenummer: PCT/EP2007/062437
(87) Internationale Veröffentlichungsnummer: WO 2008/080693

(56) Entgegenhaltungen:
- WO-A-2005/005799
- WO-A-2006/022999
- DE-A1- 10 324 482
- DE-A1-102005 034 704
- DE-A1-102005 046 070

## Beschreibung

### Stand der Technik

Die vorliegende Erfindung betrifft eine Vorrichtung zur Dosierung von Kraftstoff zum Abgassystem eines Verbrennungsmotors mit einem im Abgassystem angeordneten Einspritzventil, das auch im geschlossenen Zustand durch eine strömende Kühlflüssigkeit gekühlt wird und das über einen Kraftstoffzulauf mit Kraftstoff versorgt wird, von dem ein erster Teilstrom in das Abgas eingespritzt wird und von dem ein zweiter Teilstrom über einen Kraftstoffrücklauf in einen Kraftstoff-Vorratsbehälter zurückgeführt wird.

Eine solche Vorrichtung ist aus der DE 103 24 482 A1 bekannt. Die Einspritzung von Kraftstoff in das Abgassystem erfolgt entweder mit dem Ziel, die Abgastemperatur zu beeinflussen oder um chemische Reaktionen im Abgassystem auszulösen und aufrecht zu erhalten, die zur Reneration einer Abgasnachbehandlungskomponente dienen. Bei der Einspritzung von flüssigem Kraftstoff in das vergleichsweise heiße Abgas verdampft der Kraftstoff und entzieht dem Abgas Wärme, so dass diese Maßnahme unter bestimmten Umständen zum Schutz von Bauteilen wie Abgaskrümmern und/oder Abgasturboladern vor einer Überhitzung verwendet werden kann. Zu den bestimmten Umständen zählt insbesondere eine stöchiometrische oder reduzierende Abgasatmosphäre. Erfolgt die Einspritzung dagegen in eine oxidierende Abgasatmosphäre, können chemische Reaktionen ausgelöst werden. So werden z. B. exotherm verlaufende chemische Reaktionen zur Aufheizung von Abgasnachbehandlungskomponenten wie Partikelfiltern und/oder Katalysatoren ausgelöst. Alternativ oder ergänzend wird durch die Einspritzung von Kraftstoff in die zunächst oxidierende Abgasatmosphäre eine reduzierende Abgasatmosphäre erzeugt, die zur Regeneration einer Abgasnachbehandlungskomponente dient. So werden z. B. Stickoxid-Speicherkatalysatoren, die weitgehend mit Stickstoffverbindungen beladen sind, in einer reduzierenden Abgasatmosphäre bei erhöhter Abgastemperatur regeneriert. Dabei zerfallen die gespeicherten Stickstoffverbindungen und der resultierende molekulare Stickstoff wird mit dem Abgas aus dem Speicherkatalysator ausgetragen.

In der DE 103 24 482 A1 wird die Einspritzung von Kraftstoff in Verbindung mit der Regeneration eines Partikelfilters erwähnt. In diesem Fall erfolgt die Einspritzung von Kraftstoff in eine oxidierende Abgasatmosphäre, was an einem Oxidationskatalysator zu exothermen Reaktionen führt. Dadurch wird die Temperatur der immer noch oxidierenden Abgasatmosphäre so weit erhöht, dass eine Zündtemperatur für den im Partikelfilter eingelagerten Ruß überschritten wird und die Rußpartikel in der oxidierenden Abgasatmosphäre verbrennen. Das beim Gegenstand der DE 103 24 482 A1 verwendete Einspritzventil wird von einem Steuergerät mit einem elektrischen Signal angesteuert, so dass die Zumessung und die Strahl-Aufbereitung durch ein einziges Ventil erfolgt. Die Zufuhr von Kraftstoff zum Einspritzventil erfolgt über eine elektrische Pumpe, die von einem Steuergerät so gesteuert wird, dass sie bedarfsgerecht Kraftstoff zum im Abgassystem angeordneten Einspritzventil fördert.

Der von der Pumpe geförderte Kraftstoff wird durch Kühlkanäle innerhalb des Einspritzventils geleitet, bevor er in einen ersten, einzuspritzenden Teilstrom und einen zweiten, über einen Kraftstoffrücklauf in einen Kraftstoff-Vorratsbehälter zurückzuführenden Teilstrom aufgeteilt wird. Die bedarfsgerechte Steuerung der Pumpe setzt voraus, dass diese Pumpe, ihr Antrieb und ihre Ansteuerung ganz speziell zur Versorgung des im Abgassystem angeordneten Einspritzventils mit Kraftstoff ausgelegt ist und damit insbesondere nicht mit der Niederdruckpumpe des Einspritzsystems identisch ist, mit der Kraftstoff zu einer Hochdruckpumpe gefördert wird, die den Einspritzdruck für in Brennräumen des Verbrennungsmotors erfolgende Verbrennungen erzeugt.

Aus der WO 2006/022999 ist eine Vorrichtung zur Dosierung von Kraftstoff bekannt, bei der der Kraftstoff ein Einspritzventil der Vorrichtung kühlt.

### Offenbarung der Erfindung

Die vorliegende Erfindung unterscheidet sich von diesem Stand der Technik dadurch, dass der Kraftstoffzulauf aus einem Niederdrucksystem eines Einspritzsystems gespeist wird, das zur Dosierung von Kraftstoff für Verbrennungen dient, die in einem Brennraum des Verbrennungsmotors erfolgen und dass die Vorrichtung eine hydraulisch mit dem Kraftstoffzulauf verbundene Dämpfungsvorrichtung zur Dämpfung von Druckschwingungen aufweist.

Durch die Versorgung der Vorrichtung zur Dosierung von Kraftstoff zum Abgassystem aus dem Niederdrucksystem des herkömmlichen Einspritzsystems kann auf eine separate Pumpe mit ihrem Antrieb und ihrer Ansteuerung verzichtet werden, was im Hinblick auf die Kosten des Abgasnachbehandlungssystems und auch im Hinblick auf die Zuverlässigkeit des Systems von Vorteil ist.

Die Speisung aus dem Niederdrucksystem des herkömmlichen Einspritzsystems kann jedoch zur Einkopplung von Druckschwingungen aus dem Niederdrucksystem in die Vorrichtung führen. Die Amplitude solcher Druckschwingungen kann ein Mehrfaches des mittleren Drucks in dem Niederdrucksystem betragen. Solche Druckschwingungen können die Dosierung von Kraftstoff in das Abgassystem beeinträchtigen, weil sie das Öffnungsverhalten des Einspritzventils nachteilig beeinflussen können. So wird bei druckgesteuerten Einspritzventilen ein sogenannter Schnarrbetrieb angestrebt, bei dem das Einspritzventil in schneller Folge öffnet und schließt, was auch als Schnarren bezeichnet wird.

Dabei wird das Einspritzventil durch den Druck im Kraftstoffsystem gegen die Kraft einer Feder geöffnet. Durch die Öffnung des Einspritzventils bricht der Druck vor dem Einspritzventil kurzzeitig ein, was zu einem Schließen des Einspritzventils führt. Bei geschlossenem Einspritzventil baut sich der Druck vor dem Einspritzventil erneut auf, so dass es erneut öffnet. Im Ergebnis öffnet und schließt das Einspritzventil in der auch als Schnarren bezeichneten schnellen Folge. Durch das Schnarren wird der Einspritzstrahl immer wieder unterbrochen, was die Tröpfchengröße des eingespritzten Kraftstoffs verringert und so zu einer guten Aufbereitung des Kraftstoffs für eine Verdampfung im Abgas beiträgt. Das erwünschte Schnarren tritt nur in einem vergleichsweise engen Druckbereich auf, der beim Auftreten der genannten Druckschwingungen verlassen wird.

Die hydraulisch mit dem Kraftstoffzulauf verbundene Dämpfungsvorrichtung dämpft eingekoppelte Druckschwingungen und sorgt so dafür, dass der für die Strahl-Aufbereitung erforderliche Schnarrbetrieb aufrecht erhalten wird. Alternativ zu einer Strahl-Aufbereitung durch ein Schnarren des Einspritzventils kann auch ein Einspritzventil mit einer Spritzlochscheibe zur Strahl-Aufbereitung verwendet werden. Ein solches Einspritzventil ist z. B. aus der WO 94/00686 bekannt. Auch bei dieser Art von Einspritzventilen hängt die Qualität der Strahl-Aufbereitung vom Einspritzdruck ab, so dass die Dämpfung eingekoppelter Druckschwingungen auch bei dieser Art von Einspritzventilen einen Vorteil darstellt.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

Ausführungsbeispiele der Erfindung sind in den Zeichnungen dargestellt und werden in der nachfolgenden Beschreibung näher erläutert. Dabei bezeichnen gleiche Bezugszeichen in verschiedenen Figuren jeweils gleiche. Elemente. Es zeigen, jeweils in schematischer Form:
- Figur 1: ein erstes Ausführungsbeispiel der Erfindung;
- Figur 2: ein zweites Ausführungsbeispiel der Erfindung;
- Figur 3: ein drittes Ausführungsbeispiel der Erfindung; und
- Figur 4: ein viertes Ausführungsbeispiel der Erfindung.

### Ausführungsform(en) der Erfindung

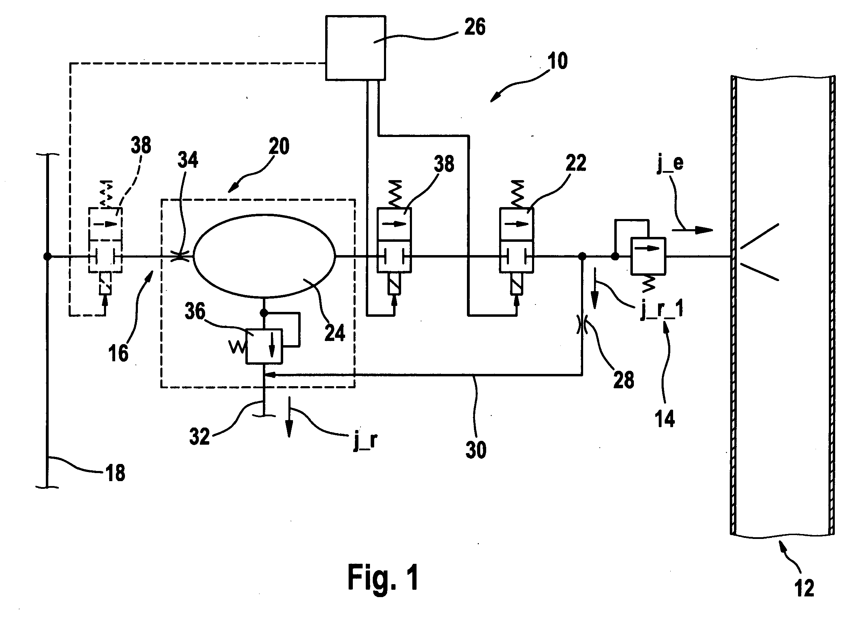

Im Einzelnen zeigt die Figur 1 eine Vorrichtung 10 zur Dosierung von Kraftstoff zum Abgassystem 12 eines Verbrennungsmotors. Die Vorrichtung 10 weist ein Einspritzventil 14 auf, das in dem Abgassystem 12 angeordnet ist. Dabei wird unter einer Anordnung im Abgassystem 12 eine Anordnung verstanden, bei der das Einspritzventil 14 an einer Öffnung einer abgasführenden Leitung so montiert ist, dass es in die Leitung hineinragt und die Öffnung dicht abschließt. Die Vorrichtung 10 weist einen Kraftstoffzulauf 16 auf, über den die Vorrichtung 10 mit Kraftstoff gespeist wird. Der Kraftstoffzulauf 16 wird aus einem Niederdrucksystem 18 eines Einspritzsystems gespeist, das zur Dosierung von Kraftstoff für Verbrennungen dient, die in einem Brennraum eines Verbrennungsmotors erfolgen.

Ausgestaltungen solcher Einspritzsysteme umfassen einen Niederdruckkreis und einen Hochdruckkreis. Im Niederdruckkreis erzeugt eine Niederdruckpumpe einen Kraftstoffdruck in der Größenordnung von 2 bis 5 bar, der von einer Hochdruckpumpe oder einzelnen Pumpe-Düse-Elementen auf einen Einspritzdruck in der Größenordnung zwischen 1000 und 2000 bar erhöht wird. Die Vorrichtung 10 weist ferner eine hydraulisch mit dem Kraftstoffzulauf 16 verbundene Dämpfungsvorrichtung 20 zur Dämpfung von Druckschwingungen und/oder Druckwellen auf.

Das in der Ausgestaltung der Figur 1 verwendete Einspritzventil 14 ist ein druckgesteuertes Einspritzventil 14, das über ein elektrisch steuerbares Zumessventil 22 an ein Beruhigungsvolumen 24 der Dämpfungsvorrichtung 20 angeschlossen ist. Dabei wird unter einem druckgesteuerten Einspritzventil 14 ein Einspritzventil verstanden, bei dem ein ansteigender Kraftstoffdruck innerhalb eines Druckraums des Einspritzventils 14 einen Dichtkörper, beispielsweise eine Düsennadel, gegen die Kraft einer Rückstellfeder von einem Dichtsitz abhebt und dabei einen Einspritzquerschnitt freigibt.

In der Ausgestaltung der Figur 1 wird der Druck im Druckraum des Einspritzventils 14 durch Ansteuern des Zumessventils 22 durch ein Steuergerät 26 gesteuert. Dadurch wird der Kraftstofffluss vom Dämpfungsvolumen 24 zum Einspritzventil 14 gesteuert. Die Ansteuerung erfolgt bevorzugt so, dass das Zumessventil 22 dann, wenn keine Einspritzung erfolgen soll, weitgehend geschlossen wird. Dann kann sich im Druckraum des Einspritzventils 14 kein Kraftstoffdruck aufbauen. Ein evtl. noch vorhandener Kraftstoffdruck baut sich über den mit einer Rücklaufdrossel 28 versehenen ersten Rücklauf 30 ab, so dass das Einspritzventil 14 schließt und/oder geschlossen bleibt. Diese Ausgestaltung verwendet daher zwei Ventile 14, 22 für die Dosierung des Kraftstoffs zum Abgas, wobei die Steuerung der Einspritzmenge mit dem Zumessventil 22 erfolgt und die Strahl- oder Spray-Aufbereitung mit dem druckgesteuerten Einspritzventil 14 erfolgt.

Ein erster Teilstrom j_e des aus dem Niederdrucksystem 18 in die Vorrichtung 10 abgezweigten Kraftstoffs wird in das Abgas im Abgassystem 12 eingespritzt. Ein zweiter Teilstrom j_r des zulaufenden Kraftstoffs läuft über einen Kraftstoff-Sammelrücklauf 32 in einen Kraftstoff-Vorratsbehälter zurück. Das Einspritzventil 14 wird im geöffneten Zustand durch die mit dem ersten Teilstrom j_e in das Abgas eingespritzte Kraftstoffmenge gekühlt. Ferner wird das Einspritzventil 14 auch im geschlossenen Zustand durch eine strömende Kühlflüssigkeit gekühlt. In der Ausgestaltung der Figur 1 wird dem Einspritzventil 14 kontinuierlich Kraftstoff zugeführt, von dem ein Teilstrom j_r1 das Einspritzventil 14 durchströmt und über den ersten Rücklauf 30 wieder abgeführt wird. Der Teilstrom j_r1 nimmt Wärme aus dem Einspritzventil 14 auf, transportiert diese über den ersten Rücklauf 30 ab und stellt auf diese Weise eine Ausgestaltung eines Kühlflüssigkeitsstroms dar, der aus Kraftstoff als Kühlmedium besteht. In einer Ausgestaltung mündet der Rücklauf 30 in den Kraftstoff-Sammelrücklauf 32.

Die Aufnahme von Wärme erfolgt in einer Ausgestaltung dadurch, dass auch der Teilstrom j_r1 durch die Druckkammer des Einspritzventils 14 geleitet wird, bevor er vom ersten Rücklauf 30 aufgenommen wird. Die Durchströmung wird bei geschlossenem Einspritzventil 14 durch ein getaktetes Öffnen und Schließen des Zumessventils 22 gesteuert, das so erfolgt, dass der Druck in der Druckkammer den Öffnungsdruck des Einspritzventils 14 nicht überschreitet. Für den Fall, dass das Einspritzventil 14 geöffnet werden soll, wird der Durchfluss durch das Zumessventil 22 erhöht, so dass sich über der Rücklaufdrossel 28 im ersten Rücklauf 30 ein Druck aufbauen kann, der den Öffnungsdruck des Einspritzventils 14 überschreitet.

In der Ausgestaltung der Figur 1 weist die Dämpfungsvorrichtung 20 das Dämpfungsvolumen 24 auf, das räumlich getrennt von dem Einspritzventil 14 in dem Kraftstoffzulauf 16 angeordnet ist. Das Dämpfungsvolumen 24 dämpft die Amplitude von Druckschwingungen, die aus dem Niederdrucksystem 18 in die Vorrichtung 10 eingekoppelt werden. Eine optional vorhandene Zulaufdrossel 34 sorgt für eine zusätzliche Dämpfung und Druckentkopplung zwischen dem Niederdrucksystem 18 und der Vorrichtung 10. Dabei ergibt sich als zusätzlicher Vorteil der Zulaufdrossel 34 eine verringerte Rückwirkung von Vorgängen in der Vorrichtung 10 auf das Druckniveau im Niederdrucksystem 18.

Das Dämpfungsvolumen 24 ist über das Drucksteuerventil 36 an den Kraftstoff-Sammelrücklauf 32 angeschlossen. Das Drucksteuerventil 36 ist bevorzugt ein druckgesteuertes Ventil, das bei einem einstellbaren Öffnungsdruck selbstständig öffnet und bei einem Unterschreiten des Öffnungsdrucks selbstständig wieder schließt. Auf diese Art und Weise können Druckspitzen im Dämpfungsvolumen 24 durch Öffnen des druckgesteuerten Drucksteuerventils 36 abgebaut werden, was den Einfluss solcher Druckspitzen auf das Öffnen und Schließen des Einspritzventils 14 minimiert.

Die genannten Druckspitzen entstehen im Niederdrucksystem 18 z. B. als Folge einer Druckerzeugung mit einer Zahnradpumpe, bei der die einzelnen Förderzähne jeweils zu entsprechenden Druckspitzen führen. Eine weitere Ursache von Druckspitzen ergibt sich aus Rückwirkungen des Hochdruckkreises, der zur Versorgung der Brennräume des Verbrennungsmotors mit Kraftstoff dient, auf das Niederdrucksystem 18. Bei Einspritzsystemen für Dieselmotoren können die Druckspitzen z. B. Werte in der Größenordnung von 20 bar erreichen, wobei das mittlere Druckniveau im Niederdrucksystem 18 in der Größenordnung von 2 bis 5 bar liegt.

Weiter zeigt die Ausgestaltung der Figur 1 ein Absperrventil 38, das stromaufwärts des Einspritzventils 14 angeordnet ist, und das im geschlossenen Zustand die Kraftstoffzufuhr zum Einspritzventil 14 unterbricht. Dieses Absperrventil 38 hat die Aufgabe, die Kraftstoffzufuhr zum Abgassystem 12 in bestimmten Situationen, beispielsweise bei einem Unfall zu unterbinden, so dass es nicht zu einem unkontrollierten Austritt von Kraftstoff in das Abgassystem 12 kommt. Zu diesem Zweck ist das Absperrventil 38 bevorzugt als elektrisch steuerbares Ventil ausgeführt. Ein solches Absperrventil 38 kann sowohl vor dem Dämpfungsvolumen 24 als auch hinter dem Dämpfungsvolumen 24 angeordnet sein.

In einer bevorzugten Ausgestaltung ist das Einspritzventil 14 dazu eingerichtet, bei passendem Einspritzdruck in einem Schnarrbetrieb zu arbeiten und dadurch für eine gute Spray-Aufbereitung oder Strahl-Aufbereitung zu sorgen. Dazu sind insbesondere die Öffnungsdrucke des Einspritzventils 14 und des Drucksteuerventils 36 aufeinander abgestimmt.

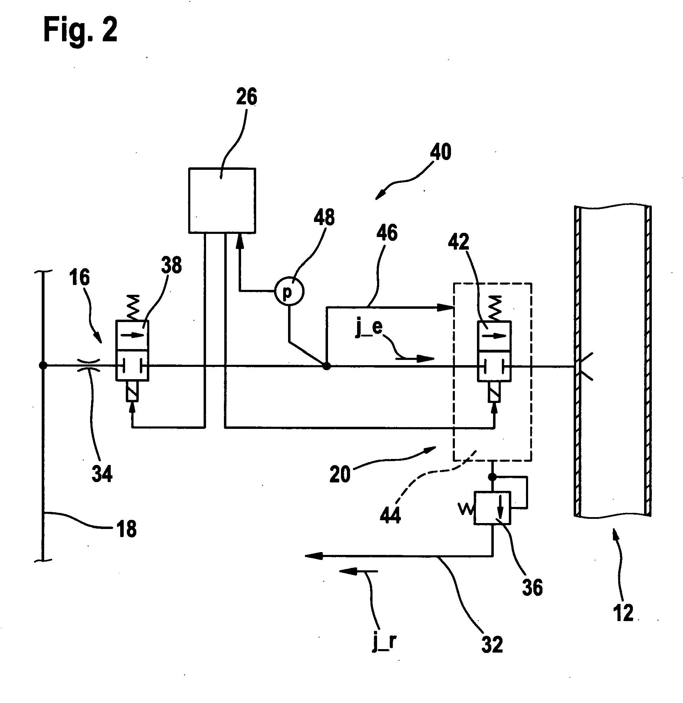

Die Ausgestaltung nach der Figur 2 zeigt ebenfalls eine Vorrichtung 40 zur Dosierung von Kraftstoff zum Abgassystem 12 eines Verbrennungsmotors mit einem im Abgassystem 12 angeordneten Einspritzventil 42, das auch im geschlossenen Zustand durch eine strömende Kühlflüssigkeit gekühlt wird, einem Kraftstoffzulauf 16, über den der Vorrichtung 40 ein erster Teilstrom j_e, der in das Abgas eingespritzt wird, und ein zweiten Teilstrom j_r, der über einen Kraftstoff-Sammelrücklauf 32 in einen Kraftstoff-Vorratsbehälter zurückläuft, zugeführt wird.

Dabei wird auch hier der Kraftstoffzulauf 16 aus dem beschriebenen Niederdrucksystem 18 eines Einspritzsystems des Verbrennungsmotors gespeist. Die hydraulisch mit dem Kraftstoffzulauf 16 verbundene Dämpfungsvorrichtung 20 weist ein Dämpfungsvolumen 44 auf, das über das Drucksteuerventil 36 an den Kraftstoff-Sammelrücklauf 32 angeschlossen ist. Abweichend vom Gegenstand der Figur 1 ist das Dämpfungsvolumen 44 in der Figur 2 als Kühlreservoir 44 ausgestaltet, wobei das Einspritzventil 42 wenigstens teilweise innerhalb des Kühlreservoirs 44 angeordnet ist. Das Kühlreservoir 44 wird von Kraftstoff durchströmt, wobei im Kraftstoffzulauf 16 auftretende Druckschwankungen durch das Dämpfungsvolumen des Kühlreservoirs 44 und die Wirkung des Drucksteuerventils 36 gedämpft werden, bevor sie sich auf die Dosierung von Kraftstoff zum Abgas auswirken.

Im Rahmen einer bevorzugten Ausgestaltung wird das Einspritzventil 42 als elektrisch gesteuertes Einspritzventil 42 realisiert, das dazu eingerichtet ist, eine Menge einzuspritzenden Kraftstoffs in Abhängigkeit von einem elektrischen Ansteuersignal des Steuergeräts 26 einzuspritzen. Abweichend vom Gegenstand der Figur 1 wird daher beim Gegenstand der Figur 2 ein einziges Ventil 42 für die Zumessung und die Spray-Aufbereitung oder Strahl-Aufbereitung verwendet. Im Vergleich zu der Ausgestaltung nach der Figur 1, bei der die Zumessung und Spray- oder Strahl-Aufbereitung räumlich getrennt durch zwei Ventile 22, ergibt sich bei der Ausgestaltung der Figur 2 ein verringerter Integrations- und Applikationsaufwand. Dieser Vorteil ergibt sich daraus, dass die Zumessung und Strahl- oder Spray-Aufbereitung mit zwei Ventilen 22, 14 zu einem hydraulisch sehr komplexen Verhalten des Systems mit einem entsprechend hohen Integrations- und Applikationsaufwand führt. Bei einem solchen System mit zwei Ventilen 22, 14 erschwert das dynamische Verhalten, insbesondere das dynamische Verhalten des Einsritzventils 14, darüber hinaus eine genaue Diagnose von Leckagen, insbesondere von Leckagen zwischen dem Zumessventil 22 und dem Einspritzventil 14.

In einer Ausgestaltung ist ferner ein Drucksensor 48 vorgesehen, der den Kraftstoffdruck vor dem Einspritzventil 42 erfasst und an das Steuergerät 26 übergibt, das auch das Einspritzventil 42 steuert. Die Kenntnis des Kraftstoffdrucks liefert dem Steuergerät 26 die Möglichkeit, die vom Kraftstoffdruck abhängige Durchflussmenge durch das Einspritzventil 42 noch genauer zu dosieren.

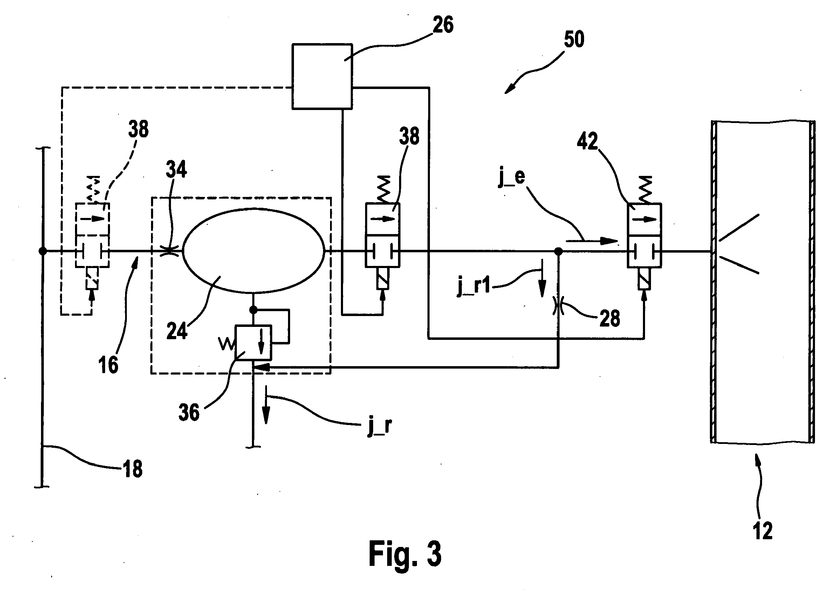

Die Ausgestaltung nach der Figur 3 zeigt eine Vorrichtung 50, bei der ebenfalls Kraftstoff zum Abgassystem 12 eines Verbrennungsmotors mit einem im Abgassystem angeordneten Einspritzventil 42 dosiert wird, das auch im geschlossenen Zustand durch eine strömende Kühlflüssigkeit gekühlt wird. Die Kühlung erfolgt bei der Ausgestaltung bei der Figur 3 so, wie es in Verbindung mit der Figur 1 beschrieben wurde. Die Gegenstände der Figuren 1 und 3 unterscheiden sich dadurch, dass die Kombination des elektrisch steuerbaren Zumessventils 22 mit einem druckgesteuerten Einspritzventil 14 nach der Figur 1 beim Gegenstand der Figur 3 durch ein elektrisch steuerbares Einspritzventil 42 ersetzt worden ist. Das elektrisch gesteuerte oder steuerbare Einspritzventil 42 ist dazu eingerichtet, eine Menge einzuspritzenden Kraftstoffs in Abhängigkeit von einem elektrischen Ansteuersignal des Steuergeräts 26 einzuspritzen. Wie beim Gegenstand der Figur 2 wird damit auch beim Gegenstand der Figur 3 ein einziges Ventil 42 für die Zumessung und die Spray-Aufbereitung oder Strahl-Aufbereitung verwendet.

Im Übrigen wird auch die Vorrichtung in der Figur 3 über einen Kraftstoffzulauf 16 mit Kraftstoff versorgt, von dem ein erster Teilstrom j_e in das Abgas eingespritzt wird und von dem ein zweiter Teilstrom j_r über einen Kraftstoff-Sammelrücklauf 32 in einen Kraftstoff-Vorratsbehälter zurückgeführt wird. Der Kraftstoffzulauf 16 wird aus dem Niederdrucksystem 18 des Einspritzsystems gespeist, das zur Dosierung von Kraftstoff für Verbrennung dient, die in einem Brennraum des Verbrennungsmotors erfolgen. Die Vorrichtung 50 weist eine hydraulisch mit dem Kraftstoffzulauf 16 verbundene Dämpfungsvorrichtung 20, mit einem Dämpfungsvolumen 24 auf, das über ein Drucksteuerventil 36 an den Kraftstoff-Sammelrücklauf 32 angeschlossen ist und dass räumlich getrennt von dem Einspritzventil 42 in dem Kraftstoffzulauf 16 angeordnet ist.

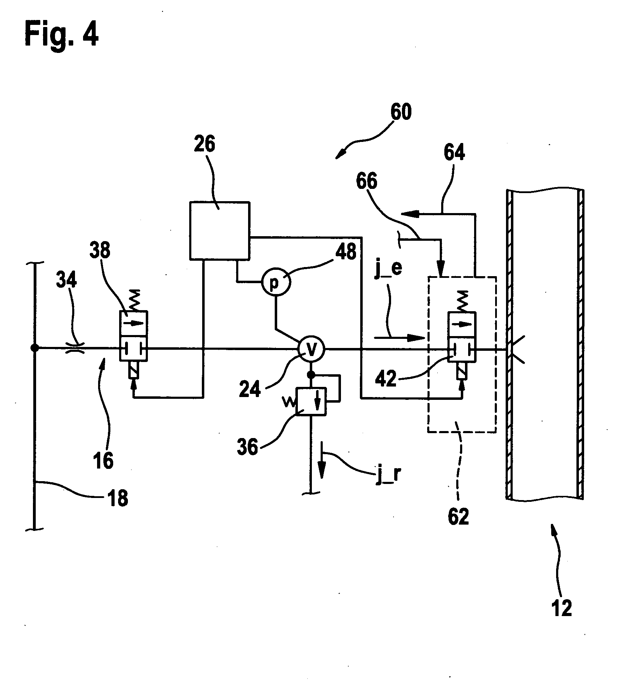

Die Ausgestaltung der Figur 4 stellt eine Abwandlung des Gegenstands der Figur 2 dar. Insofern zeigt auch die Figur 4 zunächst eine Vorrichtung 60 zur Dosierung von

Kraftstoff zum Abgassystem 12 eines Verbrennungsmotors mit einem im Abgassystem 12 angeordneten Einspritzventil 42, das auch im geschlossenen Zustand durch eine strömende Kühlflüssigkeit gekühlt wird und das über einen Kraftstoffzulauf 16 mit Kraftstoff versorgt wird. Ein erster Teilstrom j_e des über den Kraftstoffzulauf 16 in die Vorrichtung 60 eingespeisten Kraftstoffs wird in das Abgas eingespritzt und ein zweiter Teilstrom j_r wird über einen Kraftstoff-Sammelrücklauf 32 in einen Kraftstoff-Vorratsbehälter zurückgeführt. Der Kraftstoffzulauf 16 wird aus dem Niederdrucksystem 18 eines Einspritzsystems gespeist, das zur Dosierung von Kraftstoff für Verbrennungen dient, die in einem Brennraum des Verbrennungsmotors erfolgen.

Die Vorrichtung 60 weist eine hydraulisch mit dem Kraftstoffzulauf 16 verbundene Dämpfungsvorrichtung 20 mit einem Dämpfungsvolumen 24 auf, das über ein Drucksteuerventil 36 an den Kraftstoff-Sammelrücklauf 32 angeschlossen ist und das räumlich getrennt von dem Einspritzventil 42 in dem Kraftstoffzulauf 16 angeordnet ist. Das Einspritzventil 42 ist ein elektrisch gesteuertes Einspritzventil 42, das dazu eingerichtet ist, eine Menge einzuspritzenden Kraftstoffs in Abhängigkeit von einem elektrischen Ansteuersignal eines Steuergeräts 26 einzuspritzen. Auch hier wird also ein einziges Ventil 42 für die Zumessung und die Spray- oder Strahl-Aufbereitung verwendet, so dass sich auch hier die entsprechenden Vorteile ergeben, die im Zusammenhang mit der Figur 2 bereits erläutert worden sind. Das Einspritzventil 42 ist wenigstens teilweise in einem von einem Kühlmedium durchflossenen Kühlmantel 62 angeordnet. Im Unterschied zu der Ausgestaltung zu der Figur 2 wird jedoch nicht Kraftstoff, sondern die Kühlflüssigkeit des Verbrennungsmotors als Kühlmedium verwendet. Die Leitungen 64, 66 dienen zum Anschluss des Kühlmantels 62 an ein Kühlsystem des Verbrennungsmotors.

## Patentansprüche

1. Vorrichtung (10; 40; 50; 60) zur Dosierung von Kraftstoff zum Abgassystem (12) eines Verbrennungsmotors mit einem im Abgassystem (12) angeordneten Einspritzventil (14; 42), das auch im geschlossenen Zustand durch eine strömende Kühlflüssigkeit gekühlt wird und das über einen Kraftstoffzulauf (16) mit Kraftstoff versorgt wird, von dem ein erster Teilstrom (j_e) in das Abgas eingespritzt wird und von dem ein zweiter Teilstrom (j_r) über einen Kraftstoff-Sammel-Rücklauf (32) in einen Kraftstoff-Vorratsbehälter zurückgeführt wird, **dadurch gekennzeichnet, dass** der Kraftstoffzulauf (16) aus einem Niederdrucksystem (18) eines Einspritzsystems gespeist wird, das zur Dosierung von Kraftstoff für Verbrennungen dient, die in einem Brennraum des Verbrennungsmotors erfolgen, und dass die Vorrichtung (10; 40; 50; 60) eine hydraulisch mit dem Kraftstoffzulauf (16) verbundene Dämpfungsvorrichtung (20) zur Dämpfung von Druckschwingungen aufweist.

2. Vorrichtung (10; 40; 50; 60) nach Anspruch 1, **dadurch gekennzeichnet, dass** die Dämpfungsvorrichtung (20) ein Dämpfungsvolumen (24; 44) aufweist.

3. Vorrichtung (10; 40; 50; 60) nach Anspruch 2, **dadurch gekennzeichnet, dass** das Dämpfungsvolumen (24; 44) über ein Drucksteuerventil (36) an den Kraftstoff-Sammelrücklauf (32) angeschlossen ist.

4. Vorrichtung (40) nach Anspruch 2 oder 3, **dadurch gekennzeichnet, dass** das Dämpfungsvolumen (44) als Kühlreservoir (44) ausgestaltet ist und das Einspritzventil (42) wenigstens teilweise innerhalb des Kühlreservoirs (44) angeordnet ist.

5. Vorrichtung (40) nach Anspruch 4, **dadurch gekennzeichnet, dass** das Einspritzventil (42) ein elektrisch gesteuertes Einspritzventil (42) ist, das dazu eingerichtet ist, eine Menge einzuspritzenden Kraftstoffs in Abhängigkeit von einem elektrischen Ansteuersignal einzuspritzen.

6. Vorrichtung (10; 50; 60) nach Anspruch 2, **dadurch gekennzeichnet, dass** das Dämpfungsvolumen (24) räumlich getrennt von dem Einspritzventil (14; 42) in dem Kraftstoffzulauf (16) angeordnet ist.

7. Vorrichtung (10) nach Anspruch 6, **dadurch gekennzeichnet, dass** die Vorrichtung (10) ein druckgesteuertes Einspritzventil (14) aufweist, das über ein elektrisch steuerbares Zumessventil (22) an das Dämpfungsvolumen (24) angeschlossen ist.

8. Vorrichtung (50; 60) nach Anspruch 6, , **dadurch gekennzeichnet, dass** das Einspritzventil ein elektrisch gesteuertes Einspritzventil (42) ist, das dazu eingerichtet ist, eine Menge einzuspritzenden Kraftstoffs in Abhängigkeit von einem elektrischen Ansteuersignal einzuspritzen.

9. Vorrichtung (60) nach Anspruch 8, **dadurch gekennzeichnet, dass** das Einspritzventil (42) wenigstens teilweise in einem von einem Kühlmedium durchflossenen Kühlmantel (62) angeordnet ist.

10. Vorrichtung (60) nach Anspruch 9, **dadurch gekennzeichnet, dass** der Kühlmantel (60) über Leitungen (64, 66) an ein Kühlsystem des Verbrennungsmotors angeschlossen ist.

## Claims

1. Device (10; 40; 50; 60) for dosing fuel into the exhaust system (12) of an internal combustion engine, having an injection valve (14; 42) which is arranged in the exhaust system (12) and which is cooled by a flowing cooling liquid even in the closed state and which is supplied with fuel via a fuel feed line (16), of which fuel a first partial flow (j_e) is injected into the exhaust gas and a second partial flow (j_r) is returned via a fuel collecting and return line (32) into a fuel storage tank, **characterized in that** the fuel feed line (16) is fed from a low-pressure system (18) of an injection system which serves for dosing fuel for combustions which take place in a combustion chamber of the internal combustion engine, and **in that** the device (10; 40; 50; 60) has a damping device (20), which is hydraulically connected to the fuel feed line (16), for damping pressure oscillations.

2. Device (10; 40; 50; 60) according to Claim 1, **characterized in that** the damping device (20) has a damping volume (24; 44).

3. Device (10; 40; 50; 60) according to Claim 2, **characterized in that** the damping volume (24; 44) is connected to the fuel collecting and return line (32) via a pressure control valve (36).

4. Device (40) according to Claim 2 or 3, **characterized in that** the damping volume (44) is designed as a cooling reservoir (44) and the injection valve (42) is arranged at least partially within the cooling reservoir (44).

5. Device (40) according to Claim 4, **characterized in that** the injection valve (42) is an electrically controlled injection valve (42) which is set up to inject a quantity of fuel to be injected as a function of an electrical actuation signal.

6. Device (10; 50; 60) according to Claim 2, **characterized in that** the damping volume (24) is arranged spatially separately from the injection valve (14; 42) in the fuel feed line (16).

7. Device (10) according to Claim 6, **characterized in that** the device (10) has a pressure-controlled injection valve (14) which is connected to the damping volume (24) via an electrically controllable metering valve (22).

8. Device (50; 60) according to Claim 6, **characterized in that** the injection valve is an electrically controlled injection valve (42) which is set up to inject a quantity of fuel to be injected as a function of an electrical actuation signal.

9. Device (60) according to Claim 8, **characterized in that** the injection valve (42) is arranged at least partially in a cooling jacket (62) through which a cooling medium flows.

10. Device (60) according to Claim 9, **characterized in that** the cooling jacket (60) is connected to a cooling system of the internal combustion engine via lines (64, 66).

## Revendications

1. Dispositif (10 ; 40 ; 50 ; 60) pour le dosage de carburant dans le système de gaz d'échappement (12) d'un moteur à combustion interne comprenant une soupape d'injection (14 ; 42) disposée dans le système de gaz d'échappement (12), qui est refroidie aussi dans l'état fermé par un liquide de refroidissement en mouvement et qui est alimentée en carburant par le biais d'une amenée de carburant (16), depuis laquelle un premier flux partiel (j_e) est injecté dans le gaz d'échappement, et depuis laquelle un deuxième flux partiel (j_r) est ramené dans un réservoir de carburant par le biais d'un retour collecteur de carburant (32), **caractérisé en ce que** l'amenée de carburant (16) est alimentée depuis un système basse pression (18) d'un système d'injection, qui sert au dosage de carburant pour des combustions qui se produisent dans une chambre de combustion du moteur à combustion interne, et **en ce que** le dispositif (10 ; 40 ; 50 ; 60) présente un dispositif d'amortissement (20) connecté hydrauliquement à l'amenée de carburant (16) en vue d'amortir les oscillations de pression.

2. Dispositif (10 ; 40 ; 50 ; 60) selon la revendication 1, **caractérisé en ce que** le dispositif d'amortissement (20) présente un volume d'amortissement (24 ; 44).

3. Dispositif (10 ; 40 ; 50 ; 60) selon la revendication 2, **caractérisé en ce que** le volume d'amortissement (24 ; 44) est raccordé par le biais d'une soupape de commande de pression (36) au retour collecteur de carburant (32).

4. Dispositif (40) selon la revendication 2 ou 3, **caractérisé en ce que** le volume d'amortissement (44) est configuré en tant que réservoir de refroidissement (44) et la soupape d'injection (42) est disposée au moins en partie à l'intérieur du réservoir de refroidissement (44).

5. Dispositif (40) selon la revendication 4, **caractérisé en ce que** la soupape d'injection (42) est une soupape d'injection à commande électrique (42), qui est prévue pour injecter une quantité de carburant à injecter en fonction d'un signal de commande électrique.

6. Dispositif (10 ; 50 ; 60) selon la revendication 2, **caractérisé en ce que** le volume d'amortissement (24) est disposé de manière séparée spatialement de la soupape d'injection (14 ; 42) dans l'amenée de carburant (16).

7. Dispositif (10) selon la revendication 6, **caractérisé en ce que** le dispositif (10) présente une soupape d'injection à commande par pression (14), qui est raccordée au volume d'amortissement (24) par le biais d'une soupape de dosage à commande électrique (22).

8. Dispositif (50 ; 60) selon la revendication 6, **caractérisé en ce que** la soupape d'injection est une soupape d'injection à commande électrique (42), qui est prévue pour injecter une quantité de carburant à injecter en fonction d'un signal de commande électrique.

9. Dispositif (60) selon la revendication 8, **caractérisé en ce que** la soupape d'injection (42) est disposée au moins en partie dans une enveloppe de refroidissement (62) traversée par un réfrigérant.

10. Dispositif (60) selon la revendication 9, **caractérisé en ce que** l'enveloppe de refroidissement (60) est raccordée par le biais de conduites (64, 66) à un système de refroidissement du moteur à combustion interne.
